# EUROPEAN PATENT SPECIFICATION

(11) **EP 2 313 695 B1**
(45) Date of publication and mention of the grant of the patent: **20.09.2017**
(21) Application number: 09765910.6
(22) Date of filing: 18.06.2009
(51) Int. Cl.: F24F 5/00, F24F 11/00

(54) **HEATING VENTILATING AIR CONDITION SYSTEM**
HEIZUNGS-, BELÜFTUNGS- UND KLIMAANLAGE
SYSTEME DE CHAUFFAGE, VENTILATION ET CLIMATISATION

(30) Priority: 18.06.2008 US 132351
(43) Date of publication of application: 27.04.2011
(73) Proprietor: EnOcean GmbH, 82041 Oberhaching (DE)
(72) Inventor: SCHMIDT, Frank, 82054 Altkirchen (DE); EGGERT, Holger Alfons, 82166 Gräfelfing (DE); BREHLER, Markus, 82065 Baierbrunn (DE); YOU, Eugene, Salt Lake City Utah 84124 (US); O' CALLAGHAN, Jim, Cottonwood Heights Utah 84121 (US)
(74) Representative: Epping - Hermann - Fischer
(86) International application number: PCT/EP2009/057641
(87) International publication number: WO 2009/153331

(56) References cited:
- EP-A- 1 788 324
- JP-A- 61 086 527
- JP-A- 2001 317 800
- JP-A- 2006 296 304
- JP-A- 2008 042 440
- JP-A- 2008 069 994
- NL-C2- 1 030 160
- US-A1- 2006 161 306

## Description

### FIELD OF THE INVENTION

The invention relates to a heating ventilating air condition (HVAC) system.

### BACKGROUND OF THE INVENTION

A typical residential home has only one thermostat, usually located in the main living area, which controls the temperature for the whole home. For various reasons, such as the orientation to the sun, upstairs vs. basement, cooking in the kitchen, different insulation, amount of windows, etc., the temperature throughout the home may vary significantly (10° F) from the temperature at the thermostat. This often results in uncomfortable temperatures in one or another area of the home. An occupant can change the air flow to a particular room by manually adjusting the vents. However, this results in only minor improvement in comfort:
- Air vents are often located behind furniture or ceiling-mounted. They don't get changed as they are out of reach.
- The heating or air conditioning only works when the temperature at the thermostat so dictates, so opening or closing vents in other rooms doesn't make a difference if there is no air flow.
- Seasonal changes require significant adjustments, for example to drive rising heat to the lower floors in winter and to drive sinking cooled air to upper floors in summer. During transitional times, the HVAC system needs to change from heating to cooling during a single day, requiring frequent vent adjustments.
- A residence might have one room requiring heating, and another requiring cooling. This cannot be accomplished by conventional HVAC systems.
- If a large portion of the home is unoccupied, energy is wasted conditioning these rooms.

Older thermostats of HVAC systems are manually set, holding the temperature between high and low limits. Newer programmable thermostats enable different settings based upon the time of day, weekend vs. weekday settings, etc.. However, they still do not enable individual room control.

Commercial office spaces are commonly conditioned using variable air volume vents (VAV). The simplest VAV system incorporates a supply duct that distributes supply air in a cooling mode with a temperature of approximately 55° F. Because of the constant supply air temperature the air flow rate must be varied to meet the rising and falling heat gains or losses within the thermal zone served. If multiple rooms are to be conditioned the VAV must be adjusted to control the air flow for each particular room. Many VAVs rely upon manual adjustment, e.g. twisting a knob to open or close the vent. However, these vents are usually located on ceilings and are not easily reached.

Automated VAVs contain motors that adjust the aperture based upon inputs from a thermostat or a building automation system. They require a motor and data instructing them when and how much to move which requires wires for power and data signals. The cost and time required for installing such automated VAVs can be high. A heating ventilation air condition system according to the preamble of claim 1 is known from JP 2001 317800 A.

### SUMMARY OF THE INVENTION

The invention provides a heating ventilating air condition system according to claim 1. As the actuator is self-powered by one or more energy harvesters that convert ambient energies such as kinetic energy of the air flow, thermal differentials, or ambient light energy, to electrical energy, it does not need wires for supplying the actuator with power.

The system can have one or more energy storage units, such as capacitors, rechargeable batteries, mechanical storage means such as springs, etc., which can store energy harvested from the ambience in a form concentrated enough for driving the actuator.

Moreover, the system provides one or more sensors, one or more control units, configured to control the one or more actuators based on the sensed and communicated status information of the one or more sensors and a wireless communication system to communicate with the one or more sensors and other control units or a centralized controller or central control unit so that no wires are required for data communication. As a result, the air vent and the actuator can be easily installed in new ducts or installed as a replacement of the existing vent cartridge.

Further, the invention provides a method for operating the above system. The method allows a reduction of energy consumption by placing at least the actuator in sleep mode. The efficiency of the system can be improved by redistributing air from one zone to another zone.

### BRIEF DESCRIPTION OF THE DRAWING

The invention will be explained in more detail below using an exemplary embodiment and with the aid of the figures.
- Figure 1: shows an embodiment of an energy harvester,
- Figure 2: shows another embodiment of an energy harvester,
- Figure 3: shows an embodiment of an actuator,
- Figure 4: shows an embodiment of a communication process,
- Figure 5: shows an embodiment of a circuit for energy collection and supply,
- Figure 6: shows another embodiment of a circuit for energy collection and supply,
- Figure 7: shows an embodiment of intermittent radio data exchange.

### DETAILED DESCRIPTION OF PREFERRED EMBODIMENTS OF THE INVENTION

The following are embodiments of energy harvesters which harvest energy from the ambience. Several different kinds of harvesters can be used together.

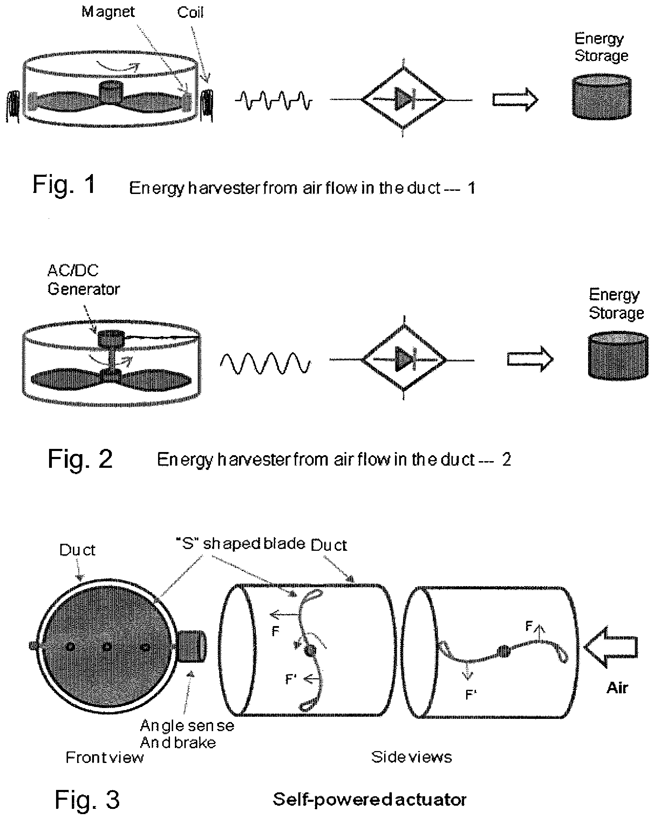

Figure 1 shows an energy harvester comprising rotating blades that turn when air flows over the blades. Magnets mounted on the blades rotate past coils mounted on the perimeter. When the magnets pass the coil the magnetic flux in the coil changes and generates an electrical current in the coil.

Figure 2 shows an energy harvester comprising an AC or DC generator directly coupled with the shaft of a rotating propeller. An AC generator is preferred because it has no commutator and brushes and is thus more robust and less noisy. In both figure the voltage is rectified and used to charge an energy storage device such as a capacitor or a rechargeable battery.

In another configuration, the propeller shaft winds a spring to store mechanical potential energy. The spring is used as the energy source to open and close the air vent.

Besides kinetic energy of the air flow other forms of energy can be harvested from the ambience:
Thermoelectric generators harvest energy from temperature differences, for example, by mounting a Peltier junction such that one plate of the junction is placed inside the duct carrying the air flow and is exposed to air that is warmer or cooler than the ambient room temperature, and the other plate is located outside the duct and is exposed to the ambient room air temperature. With temperature differences of approximately 3o K, enough energy is generated to power the actuator, the sensor, the control unit and the wireless communication system.

Light energy harvesters harvest energy from indoor light or sunlight and convert it to electrical energy. A solar cell can be mounted on the exterior of the air vent where it converts light energy in electrical energy to power the system.

The following are embodiments of actuators which can be used to control the air flow rate. They can be self-powered if they are powered by an ambient energy harvester and can have a sensor to provide feedback on the position status of the actuator to indicate how much of the air vent is opened.

Embodiments of actuators include adjustable dampers and vent cartridges with louvers. The damper or louver can be driven by a DC motor with a gear box, or a gear box coupled directly to the energy storage spring. If a spring is used as the power source, it is preferable to design the damper or louver in a way that it allows to open and close the air vent by rotation in one direction only.

Another embodiment of an actuator is shown in Figure 3. The air flow will generate a torque with a fixed direction on the "S" shaped blade. If it is let free at any angle it will keep turning in one direction. In this case a motor is not needed to drive the blade to a desired position. Only a brake mechanism, for instance by using latching solenoid, is needed to stop the blade at the desired angle so that the air flow is adjusted. A reasonable low resolution encoder or other devices can be used to detect the angle. This mechanism can also be used to harvest energy in the axial direction.

Instead of controlling the air flow rate, the actuator or additional actuators can also control the speed of a motor used for generating the air flow or to control a valve which is used for setting the amount of cooling or heating of the air flow. The actuators can also be used to control the direction of the air flow. Principally, the actuator can be used to control any of the elements of the HVAC-system. By using the status information of at least one sensor, a closed-loop control of these systems can be achieved.

The following are embodiments of the control schemes that can be used with the system.

In a distributed control of temperature zones a wireless temperature sensor is placed in different temperature zones or rooms to communicate with the HVAC actuators in the zone or room. The sensor and the actuator will form a closed control loop for temperature. Humidity can be controlled in the same fashion with a wireless humidity sensor. An occupancy sensor can be easily added to the system as well.

The following is an example of the steps that can be executed:
- The actuator awakes periodically and transmits an 'I'm here' RF signal to the thermostat.
- The thermostat replies with updated instructions to the actuator.
- The actuator implements instructions, and goes back to sleep

Synchronization information needs to be included to keep the actuator and the thermostat synchronized. The control algorithm can be implemented either in the actuator or in a coordinator so that coordinator can send the command, for example the percentage of the air vent opening, directly to the actuator and the actuator doesn't have to spend time to do the calculations and can thus save power.

The main disadvantage for the distributed control of temperature zones/rooms is lack of the cooperation between the supplies (cool/hot airs) and the demand. It can put the HVAC system into risk as well if the total vent percent is very small and the compressor/heater/fans are still running at maximum capacity.

In a centralized or integrated control of the temperature zones, the actuators in the individual temperature zones or rooms not only function with its own temperature sensor in the zone as a closed control loop, but also accept command from the central controller as supervisory or override command. All equipment and sensors in the home basically form a wireless network. This will enable high level cooperation with other subsystems of the HVAC system and handle other issues like scheduling and priority assignment etc. which can hardly be handled by the distributed zone or room controllers.

The integrated control system will greatly improve the system energy efficiency and comfortableness. It has the following benefits:
- Individual temperature zone or room control can still be implemented. Other sensors like occupancy sensor can be still incorporated into individual zones or rooms.
- Scheduled temperature profile controls are possible.
- Supply and demand can be coordinated. The output of the compressor and heater and fans can be reduced as the total air flow rate through the vents is reduced. The total percent opening of the air vent can be calculated using actual actuator positions of all actuators collected from the coordinator or central controller when the actuator checks message. This requires an actuator on the gas valve and Variable Frequency Drives (VFD) for the compressor and fans, which can also be equipped with radio communication devices so they will form part of the wireless network of the HVAC systems.
- Priority assignment of zones or rooms can be handled. If the capacity of the HVAC system has reached its limit, zones or rooms with higher priority at the time can be preferentially treated because the distribution of the supply of cool or hot air can be allocated by the central controller or coordinator. Less time delay between reaching the set point in zones or rooms with higher priority is to be expected because the central controller can allocate the resource to those zones or rooms with respect to their priority level.
- The outside ambient temperature and the average room temperature can be measured and calculated, the temperature at the main duct and fluid transmission tubes can be monitored using the wireless sensors and the information can be used for the central controller to optimize the performance of the system and to prevent equipment damages.
- A wireless handset with a graphical display can be used to monitor the temperature distribution in the house, and can be used to configure and change temperature control profiles.

The operation of a centralized control can be as follows:
- Thermostats, including solar powered thermostats periodically update a central controller of ambient and set point environmental conditions for a specific area of the building.
- The controller remains in listen mode, waiting for actuators to report in.
- An actuator periodically with configurable sleep periods awakes and measures its air vent position or status. It reports the status over radio to the central controller.
- The central controller compares the actual status to the desired status, and sends a RF message indicating the required changes in air vent settings.
- The air vent changes to the new setting. If desired, the Air vent can send an acknowledgment with updated position status, or alternatively return to sleep mode to conserve energy.

The following are embodiments of communication protocols used by the system.

Depending on how the sensors are powered, the communication protocol between the sensor and the actuator has to be carefully designed in order to reduce energy usage in the wireless nodes. The typical configuration of the system with the HVAC actuator is a self-powered temperature sensor, a self-powered HVAC actuator and one or more coordinators or centralized controllers, which can be mains powered. Optionally, a compressor VFD, a fan VFD, a burner fuel valve controller, which can be mains powered are present.

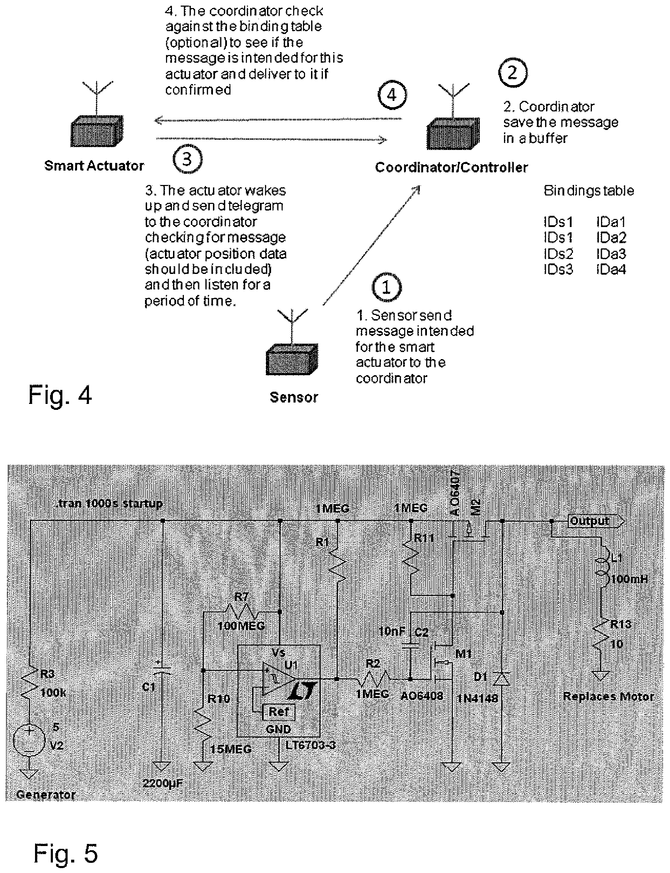

Since both the sensor and the actuator are self-powered and are in a power save mode for the majority of time to conserve power, it is hard to synchronize their wake up times so that they can communicate with each other. The main-powered coordinator can be used in this case as a bridge between the two self-powered devices. An embodiment of the communication process is illustrated in Figure 4.

The sensor data needs to be periodically transmitted to the actuator. Whenever the sensor wakes up from the power saving mode, it samples the status information such as the temperature and send the data to the coordinator that is placed within the range of its communication capability. The coordinator will buffer the data or telegram for a period of time. The actuator wakes up periodically to send a telegram including its actuator position indicating the percentage that the air vent is open as data payload to the coordinator to check the message and keeps listening for a defined time period after the checking telegram is sent out. Upon receiving the message checking telegram from the actuator, the coordinator will check if there is a message waiting for the actuator. If there is a buffered message then the message should be forwarded to the actuator immediately.

The binding can be done in several ways depending on the wireless protocol used:
- In one case, the telegram only includes the address of the sender, but not the destination. In this case, the binding needs be done between the actuator and the sensors. The coordinator only has to repeat the buffered telegrams whenever a message checking telegram is received. It is of advantage for the coordinator to also have a binding table so that the coordinator knows which telegram to repeat when a message checking telegrams is received if there are multiple buffered telegrams from the different sensors. This will reduce the listening time needed for the actuator so less energy will be consumed. Routing will not be possible in this case.

- In another case, the telegram includes both the origination and destination addresses. The binding can be done either between the sensor and the actuator as described above, or at the coordinator. The coordinator can simply repeat the telegram as described above, or buffer and send the telegram according to the binding table which is done when the system is initially configured.
- It is also possible that the telegram only includes the destination address. This can be easily handled as described above.

The following are embodiments for the method and the circuits used for supplying energy to the system.

Many ambient energy harvesters act as high impedance sources. The load on the other hand is often a low impedance energy sink. This is why the energy harvested must be collected until it is sufficient for driving the load.

The method can have the following steps:
- The thermoelectric converter charges a capacitor by the temperature difference between the adjustable air vent inside and outside.
- The collected energy becomes switched to a voltage converter as soon as the voltage at the capacitor reaches a defined threshold.
- A radio transceiver becomes supplied with energy and sends an actual temperature value or a present signal with the receiver being continued to be powered for a few ms after transmission.

- A mains powered control station receives temperature transmission and sends a control command.
- A radio transceiver receives the control command and drives an actuator in the commanded direction.
- The radio transceiver enters sleep mode if no movement is required and surplus energy can be used to charge an additional power store.
- Supply of radio transceiver and motor becomes interrupted as soon as the energy storage capacitor reaches the level of the buck regulated voltage.
- If energy on the energy storage capacitor is sufficient again the radio transceiver checks the number of still to be performed steps according to the last command received.
- If steps remain to be done the controller initiates next the step of the actuator.
- If all commanded steps are done the radio transceiver transmits the DONE signal and opens the receiver again for the next command.
- During the time that nothing has to be done energy can be collected for fast controlling.

The system could as well operate decentralized without radio control. In this case a potentiometer or a switch as input control could set the desired temperature. Then, the temperature is held constant by self adjustment. The energy for the radio transceiver can now supply the motor. This can be performed as follows:
- Thermoelectric converter charges a capacitor by the temperature difference between jalousie coverage inside and outside.
- As soon as charge is sufficient enough for a micro controller supply the micro controller reads the desired temperature e.g. by the resistance of a potentiometer or digital switches. Possibly the best method for adjustment could be an increase and a decrease switch only.
- Next it is decided if and in which direction the motor should move. This decision depends on a comparison between the actual jalousie coverage temperature outside and the actual adjusted value.
- In case of a switch with direction "MORE" or "LESS" the motor moves slowly as long as the switch isn't in neutral position and energy is available.
- In case of a several position switch or a potentiometer the motor moves slowly as long as the desired temperature isn't reached.
- The micro controller decides if a step has to be performed next and in which direction or not.
- If the desired temperature is reached the micro controller holds the temperature constant by collecting energy to make a step in the controlled direction, if required.
- The micro controller reads the inputs for the desired temperature compares it with the actual temperature and decides if a regulation step is to be performed or not.
- The micro controller enters the loop of collecting energy, reading the inputs, comparing with the actual value and initiating a step and direction or sleeping.

Figure 5 shows an embodiment of a circuit for energy collecting and supplying a motor. It has a 5V generator with 100kΩ impedance, which could be a solar cell or a thermoelectric converter. The energy collecting capacitor C1 is charged. The output is supplied as soon as the collected energy reaches the adjustable threshold of e.g. 3V and is stopped as soon as the adjustable lower threshold of e.g. 2V is reached. The recharge time interval is about 156 seconds. The low impedance output provides high energy for short time. The discharge time and therefore the remaining voltage on the energy capacitor depend on the value of C2. A motor with 100mH and 100Ω can be supplied starting with 3.16V and ending with 2.12V over a time slot of 15ms.

The actuator can be an electric motor with an ironless armature with brushes and having the following specification:
3Vdc supply
< 30mA open loop current
Efficiency > 85%
Acceleration time < 10ms

Or, as an example, a gear dc motors with 3Vdc / 13.5Ω having 0.15W of the company Faulhaber could be used. This motor is available with gears from 6:1 up to 324:1. A battery less system with the described energy collecting and supply device and such a motor would be able to drive a self powered air condition controller.

A thermoelectrical converter can charge a 2200µF capacitor to e.g. 4.5V in a few minutes. The energy stored is: W = C x U² / 2 = 2200 As/V x (4.5V)² / 2 = 22mWs. This energy can be converted to a constant 3V, where W = C x U² / 2 = 1100 As/V x (3V)² = 10mWs are lost. Nearly 12mWs at 3V remain. This is nearly ¼W supplied to a motor over 50ms. Another possibility is to discharge the capacitor by supplying the 3V motor directly with 4,5V until e.g. 2V remain. Only a residual energy of W = C x U² / 2= 2200 As/V x (2V)² / 2 = 4,4mWs remain unused. The remaining charge decreases the recharge time and therefore isn't lost. The applicable energy is nearly 18mWs. This is 0,36W for a power time of 50ms.

The Motor should start rather quickly with a low mass because the usable energy is only available for e.g. 50ms. This may also be realizable with motors not having an ironless armature.

Inrush current could be reduced by a current limiter, as long as not too much energy is lost.

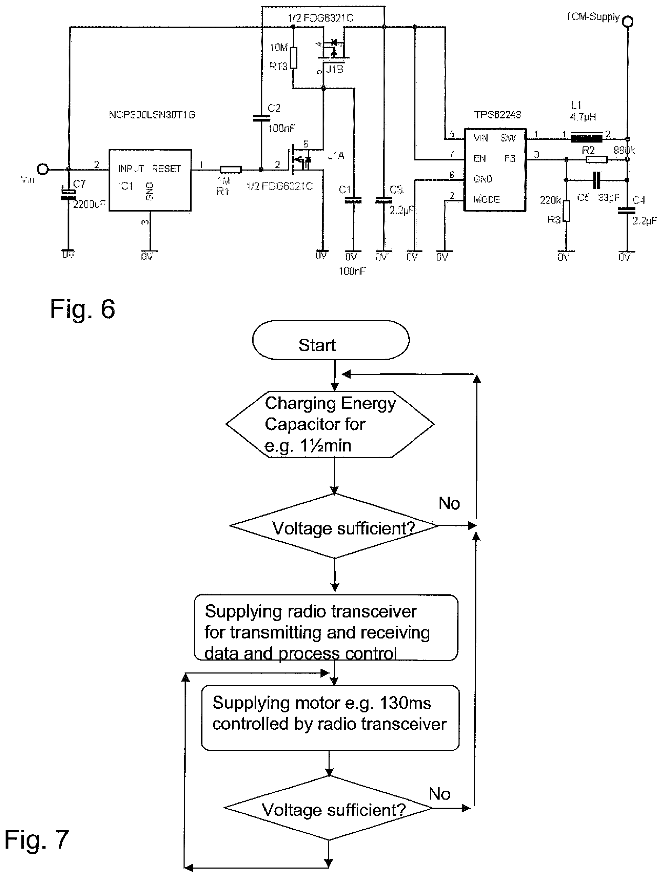

Figure 6 shows an embodiment of an energy collecting and supply device for supplying a radio transceiver with 3V and 30mA for transmitting and receiving data. The storage capacitor must provide energy for 3V/30mA for 1.5ms for the start period + 3 x 1.2ms for transmitting 3 sup telegrams + 6 ms for receiving the answer = 11ms as a minimum. All remaining energy can be used for powering the actuator.

Switch through of the energy at variable thresholds is defined by IC1. In this example, the threshold is 4.6V. Switch through time of energy is adjustable by C2. In this example, it is 130ms. The regulated output by the high efficiency buck converter is adjustable by R3 for the motor and the radio transceiver. It is assumed that the radio transceiver device has a 100Ω resistance.

Under these conditions, a capacitor of 2200µF becomes charged to 4.5V and is discharged by the buck converter to a 3V output voltage. A radio transceiver and actuator interval of 84 seconds can be achieved, where the 3V regulated output is discharged in 133ms. The available discharge time of 133ms is much more then the required 11ms for the radio transceiver supply. A lot of energy remains for driving the actuator as the motor can consume the remaining 120ms of the available powering time. An enlargement of the energy collecting capacitor increases the supply time for the actuator linearly but also increases the required charging time linearly.

Figure 7 shows an embodiment of the above intermittent radio data exchange.

The HVAC actuator with energy harvesters enables very advanced control for home and commercial buildings. They are easy to install to the new homes and retrofit to the old homes. The energy efficiency and the comfortableness of the HVAC system will be greatly improved with the device.

## Claims

1. A heating ventilating air condition system, comprising:
- One or more adjustable air vents, configured to control the air flow through the vents;
- One or more actuators, configured to control the adjustable air vents;
- One or more ambient energy harvesters, configured to supply energy to the actuators, wherein the energy required for operating the actuators is provided by the ambience;
- One or more sensors, configured to sense and to communicate status information; and
- One or more control units, configured to control the one or more actuators based on the sensed and communicated status information of the one or more sensors; and **characterised by**
- A wireless communication system configured such that the one or more actuators communicate wirelessly with the one or more sensors and the one or more control units.

2. The system according to claim 1, wherein a central control unit is configured to supply information to a plurality of control units, each control unit being configured to control at least one actuator based on at least one sensed and communicated status information of at least one respective sensor, wherein the central control unit is configured to control one or more actuators separately according to a program and/or depending on the status information supplied by the at least one respective sensor.

3. The system according to claim 1 or 2, wherein the one or more energy harvesters are thermoelectric generators using temperature differences or temperature changes.

4. The system according to claim 3, wherein the temperature difference is between air inside and outside of the air vents.

5. The system according to claim 1 or 2, wherein the one or more energy harvesters convert energy based on one of the following:
- kinetic energy of air flow;
- ambient light, especially indoor light or sunlight; and
- any energy provided by the system itself.

6. The system according to one of claims 1 to 5, further comprising an energy storage means, configured to store the energy converted by the one or more energy harvesters.

7. The system according to claim 6, wherein the energy storage means is a capacitor, a rechargeable battery or a mechanical storage means.

8. The system according to one of claims 1 to 7, wherein the sensed and communicated status information of the one or more sensors is one or more of the following:
- indoor air quality;
- gas concentration of carbon monoxide, carbon dioxide and/or smoke;
- status of windows, doors and other equipment;
- room air temperature;
- humidity;
- occupancy information for people and/or animals;
- temperature of the air leaving the air vents;
- dew point;
- parameters of the heating and cooling generating system, such as temperature, air speed and motor speed; and
- a position of the adjustable air vents correlating to the air flow rate.

9. The system according to one of claims 1 to 8, wherein the one or more sensors are self-powered by the one or more energy harvesters.

10. The system according to one of claims 1 to 9, wherein:
- The air temperature, and/or
- The air speed of the air flow, and/or
- The direction of the air flow
are controlled by the one or more control units.

11. The system according to one of claims 1 to 10, wherein the one or more actuators are driven by a respective electrical motor, mechanical spring or by power of the air flow.

12. The system according to claim 11, wherein the electrical motor is a stepper motor.

13. The system according to claim 1, wherein the air vents have dimensions that can replace older air vents.

14. A method for operating a system according to one of claims 1 to 13, comprising the steps of:
- Periodically sensing and wirelessly communicating status information from the one or more sensor to the one or more control units;
- Periodically wirelessly communicating an actual air vent position to the one or more control units by the one or more actuators;
- Comparing the actual air vent position with a desired air vent position, wherein the desired air vent position is calculated by the one or more control units from the status information and from at least one preset value; and
- Updating the air vent position by means of the one or more actuator in dependence of the comparison result.

15. The method according to claim 14, wherein the one or more sensors periodically wake up from a power saving mode and sense and communicate the status information to the one or more control units.

16. The method according to claim 14 or 15, wherein the one or more actuators send out a checking message and listen a defined time period for receiving a buffered message from the one or more control units for updating their respective position.

17. The method according to claim 16, wherein the one or more actuators are activated for the defined time period that is sufficiently long for:
- Sending the checking message to the one or more control units;
- Receiving the buffered message from the one or more control units; and
- Updating the air vent position; and
otherwise are placed in a sleep mode.

18. The method according to one of claims 14 to 17, wherein the one or more actuators are updated stepwise.

19. The method according to one of claims 14 to 18, further comprising the steps of:
- Harvesting energy from the ambience and storing this energy in energy storage means;
- Activating the one or more control units for receiving the status information of the one or more sensors and comparing the actual air.vent position with the desired air vent position;
- updating the air vent position appropriate to the comparison result;
- deactivating the control unit at least partially.

20. The method according to one of claims 14 to 19, wherein air from outside a building or another thermal zone is used
- for cooling a thermal zone if the air outside the building or in the other thermal zone is cooler than the air inside the thermal zone, and
- for heating a thermal zone if the air outside the building or in the other thermal zone is warmer than the air inside the thermal zone.

21. The method according to claim 20, wherein the air vent is automatically opened during night and early morning for cooling the thermal zone.

## Patentansprüche

1. Heiz-Lüftungs-Klimaanlagensystem, aufweisend:
- einen oder mehrere verstellbare Entlüfter, die eingerichtet sind, den Luftstrom durch die Entlüfter zu steuern;
- einen oder mehrere Aktuatoren, die eingerichtet sind, die verstellbaren Entlüfter zu steuern,
- eine oder mehrere Energy-Harvesting-Einrichtungen, die eingerichtet sind, Energie an die Aktuatoren zu liefern, wobei die zum Betrieb der Aktuatoren benötigte Energie durch die Umgebung bereitgestellt wird;
- einen oder mehrere Sensoren, die eingerichtet sind, Statusinformationen zu erfassen und zu kommunizieren; und
- eine oder mehrere Steuereinheiten, die eingerichtet sind, die einen oder mehrere Aktuatoren auf Grundlage der erfassten und kommunizierten Statusinformationen der einen oder mehreren Sensoren zu steuern;
und **gekennzeichnet durch**
- ein Drahtloskommunikationssystem, das derart eingerichtet ist, dass der eine oder die mehreren Aktuatoren drahtlos mit dem einen oder den mehreren Sensoren und der einen oder den mehreren Steuereinheiten kommunizieren.

2. System nach Anspruch 1, wobei eine zentrale Steuereinheit eingerichtet ist, Informationen an eine Vielzahl von Steuereinheiten zu liefern, wobei jede Steuereinheit eingerichtet ist, zumindest einen Aktuator auf Grundlage von zumindest einer erfassten und kommunizierten Statusinformation von zumindest einem jeweiligen Sensor zu steuern, wobei die zentrale Steuereinheit eingerichtet ist, einen oder mehrere Aktuatoren gemäß einem Programm und/oder abhängig von den Statusinformationen, die von dem zumindest ein jeweiligen Sensor geliefert werden, separat zu steuern.

3. System nach Anspruch 1 oder 2, wobei die eine oder mehreren Energy-Harvesting-Einrichtungen thermoelektrische Generatoren sind, die Temperaturunterschiede oder Temperaturveränderungen nutzen.

4. System nach Anspruch 3, wobei der Temperaturunterschied zwischen Luft innerhalb und außerhalb der Entlüfter besteht.

5. System nach Anspruch 1 oder 2, wobei die eine oder mehreren Energy-Harvesting-Einrichtungen Energie auf Grundlage einer der folgenden Aspekte umwandelt:
- kinetische Energie des Luftstroms;
- Umgebungslicht, insbesondere Innenraumlicht oder Sonnenlicht; und
- jedwede Energie, die durch das System selbst bereitgestellt wird.

6. System nach einem der Ansprüche 1 bis 5, ferner aufweisend eine Energiespeichereinrichtung, die eingerichtet ist, die von der einen oder den mehreren Energy-Harvesting-Einrichtungen umgewandelte Energie zu speichern.

7. System nach Anspruch 6, wobei die Energiespeichereinrichtung ein Kondensator, eine wiederaufladbare Batterie oder eine mechanische Speichereinrichtung ist.

8. System nach einem der Ansprüche 1 bis 7, wobei es sich bei den erfassten und kommunizierten Statusinformationen des einen oder der mehreren Sensoren um zumindest eine der folgenden handelt:
- Innenluftqualität;
- Gaskonzentration von Kohlenmonoxid, Kohlendioxid und/oder Rauch;
- Zustand von Fenstern, Türen und anderer Ausrüstung;
- Raumlufttemperatur;
- Luftfeuchtigkeit;
- Belegungsinformationen für Personen und/oder Tiere;
- Temperatur der die Entlüfter verlassenden Luft;
- Taupunkt;
- Parameter des Heiz-und Kühlerzeugungssystems, wie etwa Temperatur, Luftgeschwindigkeit und Motordrehzahl; und
- eine Position der verstellbaren Entlüfter, die mit der Luftstromrate korreliert.

9. System nach einem der Ansprüche 1 bis 8, wobei sich die einen oder mehreren Sensoren vermittels der einen oder mehreren Energy-Harvesting-Einrichtungen selbst mit Strom versorgen.

10. System nach einem der Ansprüche 1 bis 9, wobei:
- die Lufttemperatur, und/oder
- die Luftgeschwindigkeit des Luftstroms, und/oder
- die Richtung des Luftstroms
durch die eine oder mehreren Steuereinheiten gesteuert wird bzw. werden.

11. System nach einem der Ansprüche 1 bis 10, wobei der eine oder die mehreren Aktuatoren durch einen jeweiligen Elektromotor, eine mechanische Feder oder durch die Energie des Luftstroms angetrieben werden.

12. System nach Anspruch 11, wobei der Elektromotor ein Schrittmotor ist.

13. System nach Anspruch 1, wobei die Entlüfter Abmessungen besitzen, die ältere Entlüfter ersetzen können.

14. Verfahren zum Betreiben eines Systems nach einem der Ansprüche 1 bis 13, umfassend die Schritte:
- Periodisches Erfassen und drahtloses Kommunizieren von Statusinformationen von dem einen oder den mehreren Sensoren an die eine oder mehreren Steuereinheiten;
- Periodisches, drahtloses Kommunizieren einer tatsächlichen Entlüftungsposition an die eine oder mehreren Steuereinheiten durch den einen oder die mehreren Aktuatoren;
- Vergleichen der tatsächlichen Entlüftungsposition mit einer Soll-Entlüftungsposition, wobei die Soll-Entlüftungsposition durch die eine oder mehreren Steuereinheiten aus den Statusinformationen und aus zumindest einem Vorgabewert berechnet wird; und
- Aktualisieren der Entlüftungsposition mittels des einen oder der mehreren Aktuatoren in Abhängigkeit des Vergleichsergebnisses.

15. Verfahren nach Anspruch 14, wobei der eine oder die mehreren Sensoren periodisch aus einem Stromsparmodus erwachen und die Statusinformationen erfassen und an die eine oder mehreren Steuereinheit kommunizieren.

16. Verfahren nach Anspruch 14 oder 15, wobei der eine oder die mehreren Aktuatoren eine Prüfnachricht aussenden und eine vorgegebene Zeitspanne abhören, um eine gepufferte Nachricht von der einen oder den mehreren Steuereinheiten zur Aktualisierung deren jeweiliger Position zu empfangen.

17. Verfahren nach Anspruch 16, wobei der eine oder die mehreren Aktuatoren für den definierten Zeitraum aktiviert werden, der ausreichend lang ist, um:
- die Prüfnachricht an die eine oder mehreren Steuereinheiten zu senden;
- die gepufferte Nachricht von der einen oder den mehreren Steuereinheiten zu empfangen; und
- die Entlüftungsposition zu aktualisieren; und
andernfalls in einen Ruhemodus versetzt zu werden.

18. Verfahren nach einem der Ansprüche 14 bis 17, wobei der eine oder die mehreren Aktuatoren schrittweise aktualisiert werden.

19. Verfahren nach einem der Ansprüche 14 bis 18, ferner umfassend die Schritte:
- Sammeln von Energie aus der Umgebung und Speichern dieser Energie in Energiespeichermitteln;
- Aktivieren der einen oder mehreren Steuereinheiten, um die Statusinformationen des einen oder der mehreren Sensoren zu empfangen und die tatsächliche Entlüftungsposition mit der Soll-Entlüftungsposition zu vergleichen;
- Aktualisieren der Entlüftungsposition entsprechend dem Vergleichsergebnis;
- zumindest teilweises Deaktivieren der Steuereinheit.

20. Verfahren nach einem der Ansprüche 14 bis 19, wobei Luft von außerhalb eines Gebäudes oder einer anderen Temperaturzone genutzt wird, um
- eine Temperaturzone zu kühlen, falls die Luft außerhalb des Gebäudes oder in der anderen Temperaturzone kühler ist als die Luft innerhalb der Temperaturzone, und
- eine Temperaturzone zu erwärmen, falls die Luft außerhalb des Gebäudes oder in der anderen Temperaturzone wärmer ist als die Luft innerhalb der Temperaturzone.

21. Verfahren nach Anspruch 20, wobei die Belüftung nachts und am frühen Morgen automatisch geöffnet wird, um die Temperaturzone zu kühlen.

## Revendications

1. Système de chauffage, de ventilation et de climatisation, comprenant :
- un ou plusieurs évents réglables, configurés pour commander le débit d'air à travers les évents ;
- un ou plusieurs actionneurs, configurés pour commander les évents réglables ;
- un ou plusieurs récupérateurs d'énergie ambiante, configurés pour fournir de l'énergie aux actionneurs, dans lequel l'énergie requise pour faire fonctionner les actionneurs est fournie par l'ambiance ;
- un ou plusieurs capteurs, configurés pour détecter et communiquer des informations d'état ; et
- une ou plusieurs unités de commande, configurées pour commander les un ou plusieurs actionneurs sur la base des informations d'état détectées et communiquées des un ou plusieurs capteurs, et
**caractérisé par**
un système de télécommunications sans fil configuré de telle sorte que les un ou plusieurs actionneurs communique(nt) sans fil avec les un ou plusieurs capteurs et les une ou plusieurs unités de commande.

2. Système selon la revendication 1, dans lequel une unité de commande centrale est configurée pour fournir des informations à une pluralité d'unités de commande, chaque unité de commande étant configurée pour commander au moins un actionneur sur la base d'au moins une ou plusieurs informations d'état détectées et communiquées du au moins un capteur respectif, dans lequel l'unité de commande centrale est configurée pour commander un ou plusieurs actionneurs séparément en fonction d'un programme et/ou suivant les informations d'état fournies par le au moins un capteur respectif.

3. Système selon la revendication 1 ou 2, dans lequel les un ou plusieurs récupérateurs d'énergie sont des générateurs thermoélectriques utilisant les différences de température ou les changements de température.

4. Système selon la revendication 3, dans lequel la différence de température est celle entre l'air à l'intérieur et à l'extérieur des évents.

5. Système selon la revendication 1 ou 2, dans lequel les un ou plusieurs récupérateurs d'énergie convertissent l'énergie sur la base d'un des éléments suivants :
- l'énergie cinétique du débit d'air ;
- la lumière ambiante, spécialement la lumière dans les locaux ou la lumière solaire, et
- toute énergie fournie par le système lui-même.

6. Système selon l'une quelconque des revendications 1 à 5, comprenant en outre un moyen de stockage d'énergie, configuré pour stocker l'énergie convertie par les un ou plusieurs récupérateurs d'énergie.

7. Système selon la revendication 6, dans lequel le moyen de stockage d'énergie est un condensateur, une pile rechargeable, ou un moyen de stockage mécanique.

8. Système selon l'une quelconque des revendications 1 à 7, dans lequel les informations d'état détectées et communiquées des un ou plusieurs capteurs sont un ou plusieurs des éléments suivants :
- qualité d'air des locaux ;
- concentration en gaz, de monoxyde de carbone, dioxyde de carbone et/ou fumée ;
- état des fenêtres, portes et autres équipements ;
- température de l'air de la pièce ;
- humidité ;
- informations d'occupation quant aux personnes et/ou animaux ;
- température de l'air sortant des évents ;
- point de rosée ;
- paramètres du système de génération de chauffage et de refroidissement, tels que la température, la vitesse de l'air et la vitesse de moteur, et
- une position des évents réglables en corrélation avec le débit d'air.

9. Système selon l'une quelconque des revendications 1 à 8, dans lequel les un ou plusieurs capteurs sont à alimentation propre par les un ou plusieurs récupérateurs d'énergie.

10. Système selon l'une quelconque des revendications 1 à 9, dans lequel
- la température d'air, et/ou
- la vitesse de l'air, et/ou
- le sens du débit d'air
sont commandés par les unes ou plusieurs unités de commande.

11. Système selon l'une quelconque des revendications 1 à 10, dans lequel les uns ou plusieurs actionneurs sont entraînés par le biais d'un moteur électrique respectif, d'un ressort mécanique, ou par la puissance du débit d'air.

12. Système selon la revendication 11, dans lequel le moteur électrique est un moteur pas-à-pas.

13. Système selon la revendication 1, dans lequel les évents présentent des dimensions qui peuvent remplacer des évents plus anciens.

14. Procédé destiné à faire fonctionner un système selon l'une quelconque des revendications 1 à 13, comprenant les étapes consistant à :
- détecter périodiquement et communiquer sans fil des informations d'état des un ou plusieurs capteurs aux une ou plusieurs unités de commande ;
- communiquer sans fil et périodiquement une position d'évent réelle aux une ou plusieurs unités de commande par les un ou plusieurs actionneurs ;
- comparer la position d'évent réelle avec une position d'évent souhaitée, où la position d'évent souhaitée est calculée par les une ou plusieurs unités de commande à partir des informations d'état et à partir d'au moins une valeur préréglée, et
- mettre à jour la position d'évent à l'aide des un ou plusieurs actionneurs en fonction du résultat de comparaison.

15. Procédé selon la revendication 14, dans lequel les un ou plusieurs capteurs sortent périodiquement d'un mode d'économie d'énergie, et détectent et communiquent les informations d'état aux une ou plusieurs unités de commande.

16. Procédé selon la revendication 14 ou 15, dans lequel les un ou plusieurs actionneurs envoient un message de vérification et écoutent sur une période de temps définie quant à la réception d'un message en mémoire tampon provenant des une ou plusieurs unités de commande en vue d'une mise à jour de leur position respective.

17. Procédé selon la revendication 16, dans lequel les un ou plusieurs actionneurs sont activés sur la période de temps définie, laquelle est suffisamment longue pour :
- envoyer le message de vérification aux une ou plusieurs unités de commande ;
- recevoir le message en mémoire tampon provenant des une ou plusieurs unités de commande, et
- mettre à jour la position d'évent, et
sont sinon placés en mode veille.

18. Procédé selon l'une quelconque des revendications 14 à 17, dans lequel les un ou plusieurs actionneurs sont mis à jour pas à pas.

19. Procédé selon l'une quelconque des revendications 14 à 18, comprenant en outre les étapes consistant à :
- récupérer l'énergie de l'ambiance et stocker cette énergie dans un moyen de stockage d'énergie ;
- activer les une ou plusieurs unités de commande pour recevoir les informations d'état des un ou plusieurs capteurs, et comparer la position d'évent réelle avec la position d'évent souhaitée ;
- mettre à jour la position d'évent appropriée pour le résultat de comparaison, et
- désactiver l'unité de commande au moins partiellement.

20. Procédé selon l'une quelconque des revendications 14 à 19, dans lequel l'air provenant de l'extérieur d'un bâtiment ou d'une autre zone thermique est utilisé :
- pour refroidir une zone thermique si l'air à l'extérieur du bâtiment ou de l'autre zone thermique est plus frais que l'air à l'intérieur de la zone thermique, et
- pour réchauffer une zone thermique si l'air à l'extérieur du bâtiment ou dans l'autre zone thermique est plus chaud que l'air à l'intérieur de la zone thermique.

21. Procédé selon la revendication 20, dans lequel l'évent est automatiquement ouvert durant la nuit et tôt le matin pour refroidir la zone thermique.
